# EUROPEAN PATENT APPLICATION

(11) **EP 4 492 267 A1**
(43) Date of publication of application: **15.01.2025**
(21) Application number: 22930972.9
(22) Date of filing: 08.08.2022
(51) Int. Cl.: G06F 21/55, B60R 16/02, B60R 16/023, G01M 17/007

(54) **VEHICLE DIAGNOSIS SYSTEM**

(30) Priority: 10.03.2022 JP 2022037078
(71) Applicant: Hitachi Astemo, Ltd., Ibaraki 312-8503 (JP)
(72) Inventor: IDEGUCHI Kota, Tokyo 100-8280 (JP); SASA Shinya, Tokyo 100-8280 (JP); YAMAGUCHI Takashi, Tokyo 100-8280 (JP); FUJII Yasuhiro, Tokyo 100-8280 (JP); MORITA Nobuyoshi, Tokyo 100-8280 (JP)
(74) Representative: MERH-IP Matias Erny Reichl Hoffmann Patentanwälte PartG mbB
(86) International application number: PCT/JP2022/030313
(87) International publication number: WO 2023/170995

(57) **Abstract**

An object of the present invention is to provide a diagnostic server that can easily diagnose whether an abnormality occurring in a vehicle is a result of an attack or simply a malfunction. A diagnostic server 1 of the present invention includes a log acquisition unit 13 that acquires a history of a first log indicating whether an ECU 32 in a vehicle 3 executes predetermined processing in response to a request signal that requests the ECU 32 to execute the predetermined processing, and a communication determination unit 15 that, when a non-execution log indicating that the predetermined processing is not executed is included in the history, determines validity of communication used to transmit the request signal corresponding to the non-execution log.

## Description

### Technical Field

The present invention relates to a vehicle diagnostic system, and more particularly to a diagnostic system for specifying a cause of an abnormality when the abnormality or a symptom of the abnormality occurs in a device of a vehicle.

### Background Art

As the IoT advances, with all kinds of things being connected to the Internet, the automotive industry is also moving toward IoT, with connected cars and self-driving cars. However, while the IoT adoption of automobiles brings convenience, it also increases a risk of a cyber attack via the Internet.

PTLs 1 to 3 relate to technologies for detecting cyber attacks on vehicles. PTL 1 describes technology related to a vehicle diagnostic device that reduces damage caused by hacking of vehicles, or the like. PTL 2 describes technology for detecting suspicious behavior by an attacker from vehicle logs and detecting abnormal vehicles. PTL 3 describes technology related to analyzing vehicle logs transmitted from vehicles to an external server.

### Citation List

### Patent Literature

PTL 1: JP2021-079855A
PTL 2: WO2021/038870A
PTL 3: WO2020/110414A1

### Summary of Invention

### Technical Problem

When a vehicle is subject to a cyber attack, some kind of abnormality will naturally occur in some of vehicle's devices. However, in recent years, cyber attacks have become more sophisticated, and an owner of a vehicle with an abnormality is likely to conclude that the abnormality is simply due to a malfunction. The owner who makes this conclusion is likely to take the vehicle to a repair shop or report the malfunction to a customer center, and a vehicle provider will need to respond to this.

However, when an abnormality occurring in the vehicle is actually a result of a cyber attack but is treated as simply a malfunction, the owner will not be aware that it has been subjected to a cyber attack, increasing risk of exposure to further attacks by an attacker. Further, even when it is discovered at a later inspection stage that the abnormality is the result of a cyber attack, it is likely that a long time has already passed since the abnormality occurred, and by the time this is discovered, the vehicle may have already been subjected to further attacks by the attacker. Therefore, it is necessary to quickly determine whether an abnormality occurring in a vehicle is the result of a cyber attack.

In order to distinguish between a cyber attack and a simple malfunction, a vehicle provider must, for example, establish a Product Security Incident Response Team (PSIRT) to handle safety management aimed at improving a security level of products and services, provide user support from a security perspective, and prepare to respond when incidents related to the products/services occur. However, this increases time and costs.

The technologies described in PTLs 1 to 3 also relate to diagnosing abnormalities that occur in a vehicle, such as hacking, but even these technologies cannot distinguish whether an abnormality that occurs in a vehicle is due to an attack or simply a malfunction.

The present invention is made in consideration of the above problems, and an object of the present invention is to easily diagnose whether an abnormality occurring in a vehicle or a symptom thereof is due to an attack or simply a malfunction, without spending a lot of time or cost.

### Solution to Problem

In order to solve the above problems, a vehicle diagnostic system according to the present invention includes a log acquisition unit that acquires a history of a first log indicating whether a device in a vehicle executes predetermined processing in response to a request signal that requests the device to execute the predetermined processing, and a communication determination unit that, when a non-execution log indicating that the predetermined processing is not executed is included in the history, determines validity of communication used to transmit the request signal corresponding to the non-execution log.

### Advantageous Effects of Invention

According to the present invention, it is possible to easily diagnose whether an abnormality or symptoms that have occurred in a vehicle are the result of an attack or simply a malfunction, without spending a great deal of time and costs as in the related art. Further features related to the present invention will become apparent from the description in this specification and the accompanying drawings. In addition, problems, configurations, and effects other than those described above will become apparent from description of examples below.

### Brief Description of Drawings

[Fig. 1] Fig. 1 is an overall schematic diagram illustrating operations required of each department/organization in a maintenance phase among various phases related to automobile supply.
[Fig. 2] Fig. 2 is a block diagram illustrating a configuration of a diagnostic server and a vehicle to which a vehicle diagnostic system according to the present invention is applied.
[Fig. 3] Fig. 3 is a diagram for illustrating a data structure of each piece of data handled in the present invention.
[Fig. 4] Fig. 4 is a sequence diagram illustrating a relationship between the diagnostic server, the vehicle, and processing performed by an attacker.
[Fig. 5] Fig. 5 is a list of processing assumed when a failure occurs in an ECU in the vehicle.
[Fig. 6] Fig. 6 is a list of processing assumed when the ECU in the vehicle is attacked.
[Fig. 7] Fig. 7 is a flowchart illustrating processing performed by a log acquisition unit.
[Fig. 8] Fig. 8 is a flowchart illustrating processing performed by a vehicle diagnostic system in a first example.
[Fig. 9] Fig. 9 is a flowchart illustrating processing performed by a vehicle diagnostic system in a second example.

### Description of Embodiments

Hereinafter, examples will be described with reference to the drawings.

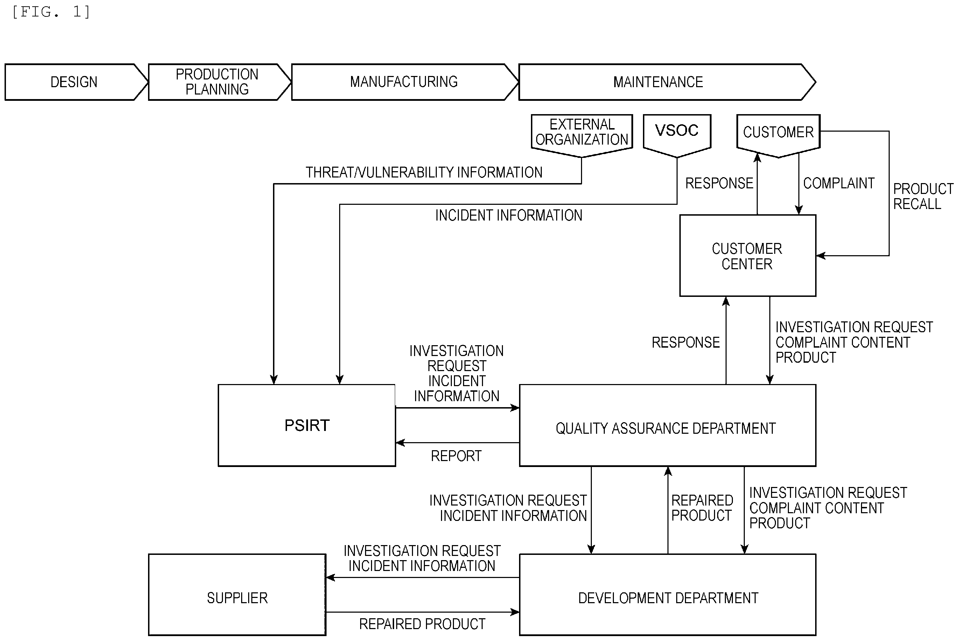

Fig. 1 is an overall schematic diagram illustrating operations required of each department/organization in a maintenance phase among various phases related to automobile supply.

When supplying vehicles to consumers, automobile suppliers typically carry out operations in design to maintenance phases as illustrated in Fig. 1. In recent years, there has been a demand for diversifying customer support, especially in the maintenance phase.

Specifically, when an abnormality occurs in a vehicle owned by a customer, the customer first assumes that a malfunction has occurred, as described above, and reports it to a customer center. Then, as illustrated in the figure, the customer center transmits various requests and information to a quality assurance department, a development department, and a supplier, who then repair the product and respond to the customer with a result of investigation.

In parallel with the above processing, when threat/vulnerability information or incident information (such as logs related to security events) is detected by external organizations such as dealers or repair shops, or by the Vehicle Security Operation Center (VSOC), which manages security during operation after the vehicle is shipped, the information is reported to the PSIRT described above, and the PSIRT then transmits the information to the quality assurance department, the development department, and the suppliers.

In this way, when a PSIRT is installed from the perspective of ensuring security as described above, if any abnormality or the possibility of an abnormality occurs in the vehicle, first points of contact for receiving reports will be dispersed, increasing labor required for distinguishing between malfunctions and cyber attacks and leading to delays in responding to vehicle abnormalities.

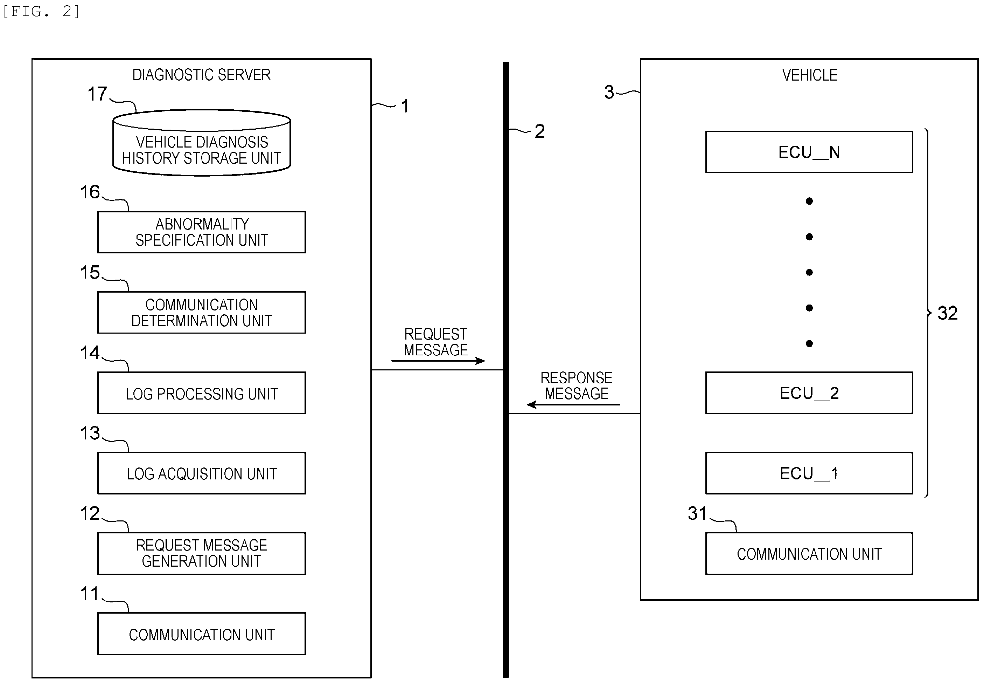

The present invention IS made against this background. Fig. 2 illustrates an overview of application of a vehicle diagnostic system according to the present invention.

The vehicle diagnostic system according to the present invention is implemented, for example, on a diagnostic server 1 on the cloud. The diagnostic server 1 is connected to a vehicle 3 via a network 2. The vehicle diagnostic system is not limited to being implemented on the cloud, but may be installed in each vehicle as hardware equipped with a CPU and memory.

The diagnostic server 1 has a communication unit 11, a request message generation unit 12, a log acquisition unit 13, a log processing unit 14, a communication determination unit 15, an abnormality specification unit 16, and a vehicle diagnosis history storage unit 17. The vehicle 3 has a communication unit 31 and a plurality of ECUs 32. The ECUs 32 are devices related to various control systems capable of self-diagnosis.

The communication unit 11 of the diagnostic server 1 transmits a request message to each ECU 32 of the vehicle 3 and receives a response message from each ECU 32. The request message generation unit 12 generates this request message. The log acquisition unit 13 records the information received from the vehicle 3 as a log.

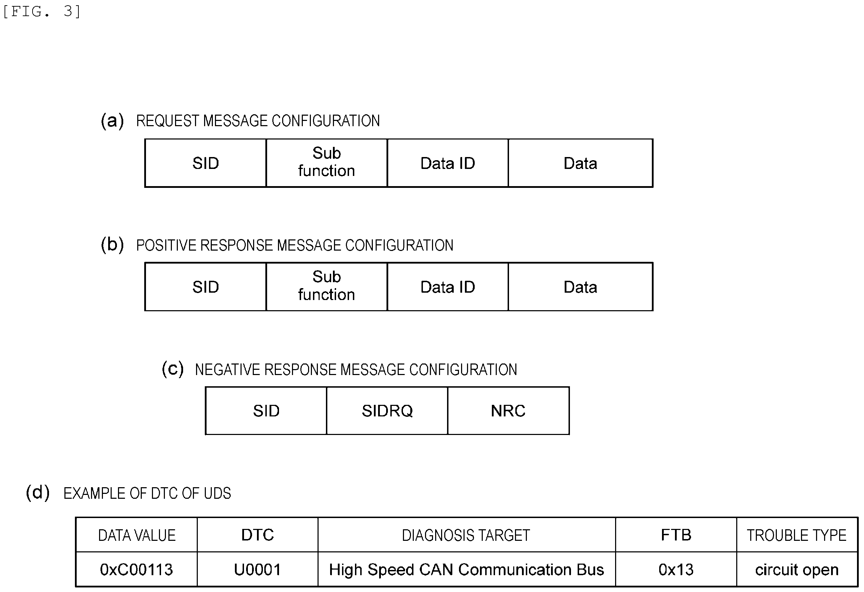

Here, the request message, response message, and contents of the log acquired by the log acquisition unit 13 will be described with reference to Fig. 3. First, the request message is a command signal for requesting each ECU 32 of the vehicle 3 to perform specific processing such as self-diagnosis, and includes a one-byte identification number (SID) indicating an outline of the requested processing, as illustrated in Fig. 3(a). Optionally, the request message may also include a one-byte identification number (Sub function) indicating details of the requested processing, a one- to two-byte ID number (Data ID) indicating a target of the requested processing, and data other than the above (Data) necessary for performing the processing.

Each ECU 32 in the vehicle 3 attempts to perform processing in response to receiving the request message, and as a result generates a response message and transmits it to the diagnostic server 1. The response message is a positive response message as illustrated in Fig. 3(b) when the ECU 32 is able to perform the requested processing, and is a negative response message as illustrated in Fig. 3(c) when the ECU 32 is unable to perform the requested processing.

The positive response message includes the SID and the result of the requested processing. Specifically, it includes [Sub function], which repeats the requested processing details as is, [Data ID], which repeats the requested data ID as is, and [Data], which indicates the data obtained as a result of the processing.

The negative response message includes an identification number (SID: fixed at 0x7F) indicating that it is a negative response, an SIDRQ of the processing that could not be performed, and a negative response code (NRC), which is a code number indicating the reason why the processing could not be performed. The NRC is a one-byte code defined in ISO 14229-1, and in addition to codes that indicate cases where the processing could not be performed simply because of a timeout or the like, it also includes security-related error codes such as multiple authentication failures and certificate verification failures.

The request and response messages are sent and received using Unified Diagnostic Services (UDS) communication. UDS is a new diagnostic communication specification framework that is a major improvement over KWP based on practical experience and conforms to ISO 14229. UDS is a communications protocol with a streamlined specification and a greatly expanded scope of standardization. In recent years, it has been used particularly in the field of vehicle diagnosis, and is implemented as a session layer on the lower layer CAN.

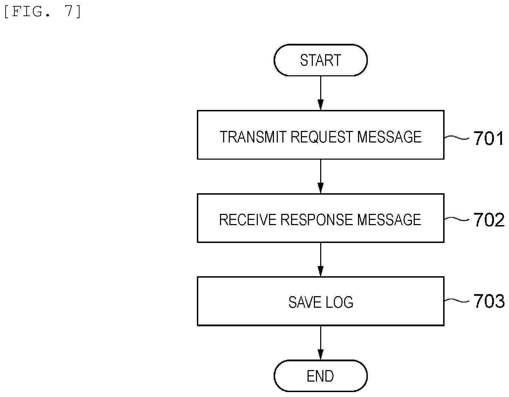

The log acquisition unit 13 acquires information about the response message as a first log indicating whether each ECU of the vehicle 3 was able to perform the requested processing. The request message may be generated a plurality of times for one ECU 32 or may be generated for a plurality of ECUs 32. Therefore, the log acquisition unit 13 acquires and stores the above information together with a timestamp as a history of the first log. This history also includes information about the contents of the UDS communication used when accessing each ECU 32. The processing performed by the log acquisition unit 13 is shown in a flowchart of Fig. 7. In step 701, a request message is sent to the ECU 32, a response message is received from the ECU 32 in step 702, and the response message is recorded in the log acquisition unit 13 as log information in step 703.

The log acquisition unit 13 can also acquire and save as a second log a Diagnostic Trouble Code (DTC) that is generated when some abnormality occurs in the ECU 32 and indicates the type of abnormality. The DTC is a three-byte code that indicates an abnormal state of the vehicle and is defined in ISO 15031-6. The DTC has a data structure as illustrated in Fig. 3(d).

DTC codes have standardized parameter fields and OEM-defined parameter fields, the latter of which can be used independently by OEMs. In the DTC, a one-byte status flag (FTB: Failure Type Byte) indicates the status (whether it is a confirmed failure or an unconfirmed failure, and the like) of the corresponding DTC code.

In addition, the DTC may also include DTC snapshot data that records the ECU control data at the time the DTC occurs, and DTC extended data that records frequency of malfunctions and an odometer value at the time of the first occurrence, in order to identify a cause of the abnormality.

The log acquisition unit 13 acquires information regarding DTCs generated in one ECU and/or a plurality of ECUs, similar to the first log, together with a timestamp as a history of the second log, and stores it in the log acquisition unit 13.

The logs acquired and stored by the log acquisition unit 13 are processed by the log processing unit 14. The log processing unit 14 references the timestamps of the above-described logs, extracts and sorts them in chronological order, and generates log time series data.

When the first log contains a non-execution log indicating that any ECU 32 was unable to execute specified processing, that is, when the first log contains an NRC, the communication determination unit 15 determines validity of the UDS communication used to transmit a request signal that requested execution of processing corresponding to the negative response message containing the NRC. This determination method will be described below.

The abnormality specification unit 16 specifies a cause of any UDS communication that has been determined by the communication determination unit 15 to be an unauthorized use.

The vehicle diagnosis history storage unit 17 stores the history of vehicle diagnoses that each vehicle 3 has performed in the past. This history is used by the communication determination unit 15 to determine the validity of UDS communication. In addition, this history can be acquired in real time from dealers, repair shops, and suppliers.

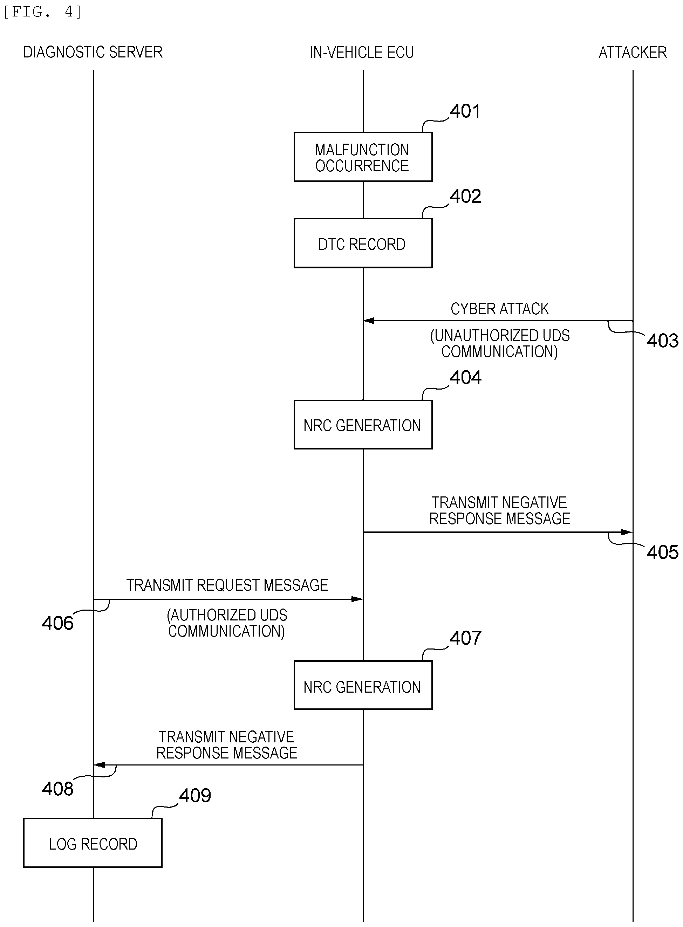

Next, an example of an event (malfunction, attack) that may occur between the diagnostic server according to this example, the ECU in the vehicle, and an attacker will be described with reference to Fig. 4.

As described above, cyber attacks on vehicles have become a problem in recent years, and attackers often use the above-described UDS communication when launching cyber attacks on vehicles. This is because UDS communication can be said to have administrator authority due to its nature of diagnosing functions of each ECU, and attackers can use this communication to launch direct attacks on each ECU.

In Fig. 4, first, when a malfunction occurs in the ECU 32 in step 401, a DTC code is issued and recorded in the ECU (step 402). This DTC is not automatically erased, and therefore can be acquired later as a log.

Next, assume that an attacker uses UDS communication in an unauthorized way for some reason to launch a cyber attack on the ECU 32 (step 403). This attack is not guaranteed to be successful. This is because when the ECU 32 detects access via UDS communication, it performs challenge-and-response authentication, which may result in a mismatch in hash values and deny the attacker's further access. In this case, the above-described NRC is generated and transmitted to the attacker as a negative response message (steps 404, 405). Information related to this generated NRC and the UDS communication used by the attacker in an unauthorized way is also recorded in ECU 32.

Then, assume that diagnostic server 1 transmits a request message to the ECU 32 using normal UDS communication (step 406). Further assume that for some reason, the ECU does not process this request message and generates an NRC (step 407). Then, a negative response message including this NRC is transmitted to the diagnostic server 1 (step 408). The diagnostic server 1 records the above-described series of information as log information (step 409).

In Fig. 4, a series of flows is described in which possible events include a malfunction of the ECU 32, an attack by an attacker being sustained but the attack fails and an NRC is generated, and an NRC being generated in response to a request message from the diagnostic server 1.

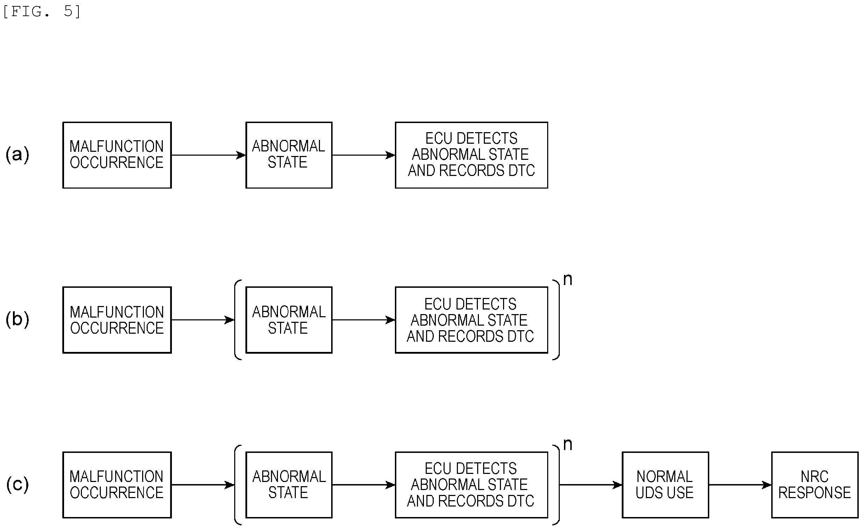

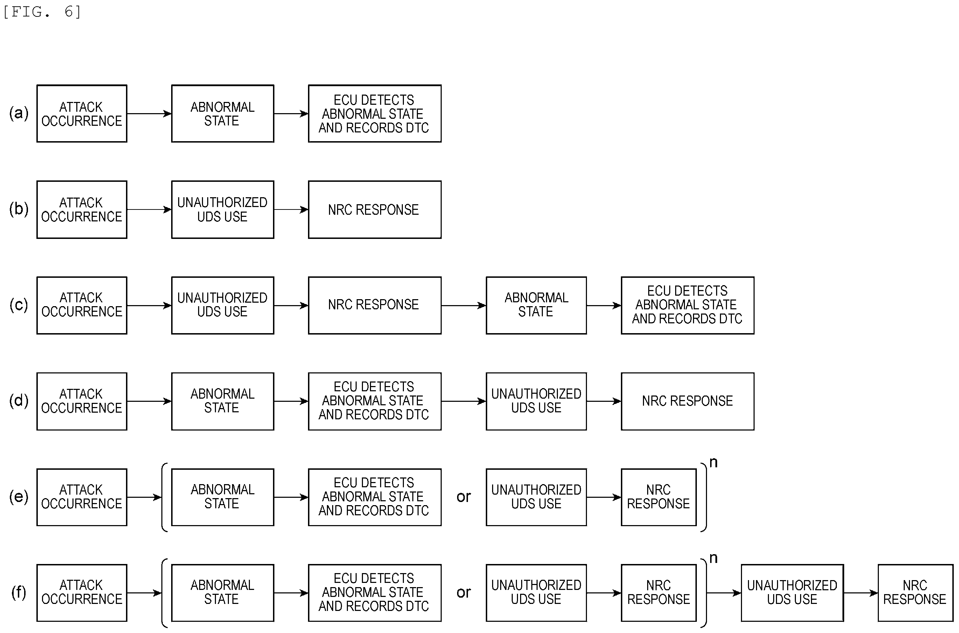

A comprehensive list of possible events as described above is illustrated in Figs. 5 and 6. Fig. 5 shows a case where a malfunction occurs in the ECU 32, and Fig. 6 shows a case where the ECU 32 is attacked by an attacker.

Fig. 5(a) corresponds to steps 401 and 402 in Fig. 4, and although not illustrated, is an example in which a positive response message is then returned in response to the request message. Fig. 5(b) shows a case in which steps 401 and 402 in Fig. 4 occur in succession. This is the case, for example, when a malfunction occurs in a central ECU, the malfunction also spreads to zone ECUs.

Fig. 5(c) shows a result after steps 401, 402, 406, 407, and 408 in Fig. 4 are completed. In this way, when a malfunction occurs in the ECU 32 and an NRC response is generated, it is assumed that the UDS communication being used is normal.

Next, a case where an attack is made by an attacker will be described using Fig. 6. First, Fig. 6(a) shows a case where an attacker launches an attack without using UDS communication (for example, physically). In this case, no record is recorded regarding the use of UDS, and when an abnormality occurs in the ECU, a DTC is issued and recorded.

Fig. 6(b) is a case corresponding to steps 403, 404, and 405 in Fig. 4. Fig. 6(c) is a case where an abnormality occurs in the ECU after that and a DTC is recorded in the ECU. This may be the case, for example, when an attack by an attacker continues for a long time and access is initially denied and an NRC is generated, but then the attack is successful for some reason.

Fig. 6(d) shows a case where an attack by an attacker is successful, causing an abnormality in the ECU and recording a DTC, and then it is determined that the UDS is being used unauthorizedly and an NRC is issued. For example, an attacker first attacks a car navigation system in a vehicle, and when this is successful, a DTC is recorded in the car navigation system. Then, the attacker attacks a central gateway via the car navigation system, but fails. Figs. 6(e) and 6(f) show cases where the above patterns are combined.

As can be seen from Fig. 6, when an attack by an attacker occurs, an NRC response occurs when unauthorized UDS communication is used. Therefore, by utilizing this, when an abnormality occurs in the ECU, it is possible to determine whether the cause of the abnormality is due to a malfunction or an attack. When there is no NRC response (Figs. 5(a), 5(b), and Fig. 6(a) and parts of Figs. 6(e) and 6(f)), the method of the related art is used to determine whether the abnormality is due to a malfunction or an attack.

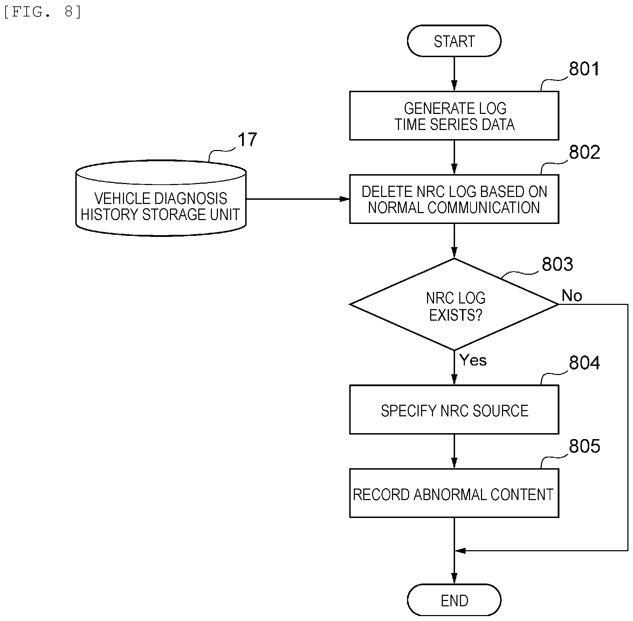

The above method of distinguishing between a malfunction and an attack when an NRC response is received will be described with reference to a flowchart of Fig. 8. First, in step 801, the log processing unit 14 rearranges the log information acquired by the log acquisition unit 13 in chronological order to generate log time series data. In step 802, the log processing unit 14 deletes the NRC log based on normal UDS communication from the log time series data. Normal UDS communication can be determined by referring to the history of vehicle diagnosis stored in the vehicle diagnosis history storage unit 17 of the diagnostic server 1. In other words, the vehicle diagnosis history records diagnostic information performed up to that point by authorized parties such as dealers, repair shops, and suppliers, so it is possible to determine whether the UDS communication was valid by, for example, comparing the timestamp when the NRC was generated with the timestamp included in the diagnostic information. Applying this to Fig. 4, the NRC generated in step 407 is deleted for a request message sent from the diagnostic server 1 using normal UDS communication. In this way, the log processing unit 14 generates modified log time series data.

The modified log time series data is sent to the communication determination unit 15. In step 803, the communication determination unit 15 determines whether the NRC log still exists in the modified log time series data (step 803). When the NRC log no longer exists, the process ends. When the NRC log exists, the abnormality specification unit 16 proceeds to step 804 to specify a source of the NRC (a source of the attack). Applying this to Fig. 4, the modified log time series data contains the NRC log generated in step 404 in response to the cyber attack by the attacker that unauthorizedly uses the UDS communication in step 403, and therefore the communication determination unit 15 can determine that the UDS communication in step 403 is unauthorizedly used. Then, in step 805, the abnormality specification unit 16 records abnormality information related to the unauthorized use of the UDS communication.

In this way, in this example, when an ECU in a vehicle generates an NRC, the malfunction and the attack are distinguished simply by determining the validity of the use of UDS communication corresponding to that NRC. Therefore, it becomes possible to easily and quickly specify the cause of the abnormality without having to send an actual abnormal product to each department for analysis or conduct a PSIRT investigation, as was done in the related art.

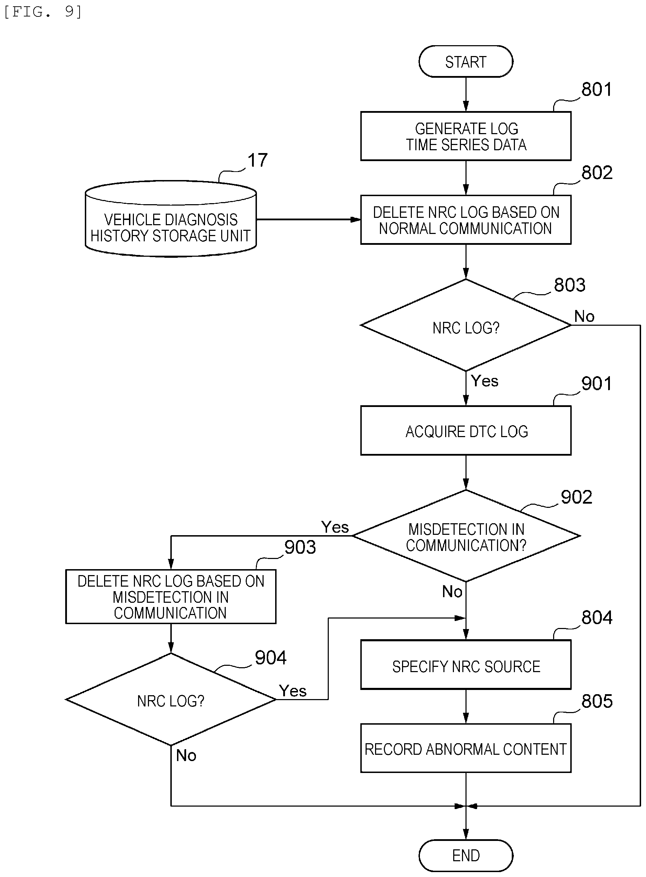

In the above example, only the first log related to an NRC was used, but when the second log related to a DTC is used, the processing flow will be as shown in Fig. 9. The processing shown in Fig. 9 performs the processing shown in steps 901 to 904 in addition to the processing shown in Fig. 8.

When it is determined in step 803 that the NRC log exists in the modified log time series data, the log acquisition unit 13 acquires the second log related to the above-described DTC (step 901). Then, the log is transmitted to the communication determination unit 15, and it is determined whether there is a false detection of UDS communication (step 902). For example, one cause of the issuance of a DTC is that a diagnostic program (a program that uses UDS communication) implemented in the ECU is started due to an ECU malfunction, and UDS communication is performed. Although this use of UDS communication is not an unauthorized use of UDS communication by an attacker, it is not recorded in the vehicle diagnosis history, and therefore may be considered as unauthorized use of UDS communication.

Therefore, the contents indicated by the DTC are verified, and the NRC corresponding to UDS communication that has been determined to be unauthorized use of UDS communication but is not unauthorized use by an attacker is deleted (step 903). Then, in step 904, it is determined again whether an NRC log exists, and if so, the process proceeds to step 804 to specify a source of the NRC (a source of the attack). The same applies when it is determined in step 902 that there is no false detection of communication.

In this way, by taking into account the second log related to the DTC in addition to the first log related to the NRC, it becomes possible to more accurately distinguish between a malfunction and an attack.

In this example, an example in which the NRC is acquired as the first log is described, but a Positive Response Code (PRC), which indicates that the ECU has normally performed the processing, can also be acquired as the first log. However, the PRC is issued more frequently than the NRC, and therefore is usually stored in a volatile manner, and that the high frequency of issuance increases the possibility of false detection.

According to the examples of the present invention described above, the following effects are obtained.
(1) A vehicle diagnostic system according to the present invention includes a log acquisition unit that acquires a history of a first log indicating whether a device in a vehicle executes predetermined processing in response to a request signal that requests the device to execute the predetermined processing, and a communication determination unit that, when a non-execution log indicating that the predetermined processing is not executed is included in the history, determines validity of communication used to transmit the request signal corresponding to the non-execution log.
   With the above configuration, it becomes possible to easily diagnose whether an abnormality occurring in the vehicle is due to an attack or simply a malfunction, without spending a lot of time or cost.
(2) The vehicle diagnostic system further includes a log processing unit that extracts the history in a time series manner to generate log time series data, and a vehicle diagnosis history storage unit that stores a history of vehicle diagnoses performed on the vehicle, where the communication determination unit compares the log time series data with the vehicle diagnosis history, and determines that the communication corresponding to the non-execution log is valid when a record corresponding to the non-execution log exists in the vehicle diagnosis history. Since the vehicle diagnosis history can be easily collected, the validity of the UDS communication can be determined without requiring complex processing.
(3) The log processing unit deletes the first log corresponding to the communication determined to be valid by the communication determination unit from the log time series data to generate modified log time series data, and the communication determination unit determines that the communication corresponding to the non-execution log is unauthorized when the modified log time series data further includes the non-execution log. Since only the first log corresponding to the communication determined to be valid by the communication determination unit is deleted, it is possible to generate and manage modified log time series data that is easy to handle and highly reliable while keeping the data volume smaller than that of the original log time series data, without deleting the first log based on unauthorized communication.
(4) The log acquisition unit further acquires a history of a second log that is generated when an abnormality occurs in the device and indicates a type of the abnormality, and when the non-execution log is further included in the modified log time series data, the communication determination unit re-determines the validity of the communication corresponding to the non-execution log based on the second log. In this way, by taking into consideration the second log related to the DTC in addition to the first log related to the NRC, the validity of UDS communication can be determined with greater accuracy.

The present invention is not limited to the above-described examples, and various modifications are possible. For example, the above-described examples are described in detail to clearly explain the present invention, and the present invention is not necessarily limited to an aspect that includes all of the configurations described. It is also possible to replace part of the configuration of one example with the configuration of another example. It is also possible to add the configuration of another example to the configuration of one example. It is also possible to delete part of the configuration of each example, or to add or replace other configurations.

### Reference Signs List

1: diagnostic server (vehicle diagnostic system)
3: vehicle
13: log acquisition unit
14: log processing unit
15: communication determination unit
17: vehicle diagnosis history storage unit

## Claims

1. A vehicle diagnostic system, comprising:
a log acquisition unit that acquires a history of a first log indicating whether a device in a vehicle executes predetermined processing in response to a request signal that requests the device to execute the predetermined processing; and
a communication determination unit that, when a non-execution log indicating that the predetermined processing is not executed is included in the history, determines validity of communication used to transmit the request signal corresponding to the non-execution log.

2. The vehicle diagnostic system according to claim 1, further comprising:
a log processing unit that extracts the history in a time series manner to generate log time series data; and
a vehicle diagnosis history storage unit that stores a history of vehicle diagnoses performed on the vehicle, wherein
the communication determination unit compares the log time series data with the vehicle diagnosis history, and determines that the communication corresponding to the non-execution log is valid when a record corresponding to the non-execution log exists in the vehicle diagnosis history.

3. The vehicle diagnostic system according to claim 2, wherein
the log processing unit deletes the first log corresponding to the communication determined to be valid by the communication determination unit from the log time series data to generate modified log time series data, and the communication determination unit determines that the communication corresponding to the non-execution log is unauthorized when the modified log time series data further includes the non-execution log.

4. The vehicle diagnostic system according to claim 3, wherein
the log acquisition unit further acquires a history of a second log that is generated when an abnormality occurs in the device and indicates a type of the abnormality, and
when the non-execution log is further included in the modified log time series data, the communication determination unit re-determines the validity of the communication corresponding to the non-execution log based on the second log.
